# EUROPEAN PATENT APPLICATION

(11) **EP 4 664 082 A1**
(43) Date of publication of application: **17.12.2025**
(21) Application number: 23921486.9
(22) Date of filing: 24.11.2023
(51) Int. Cl.: G01H 17/00, G06Q 50/10, G08C 17/02

(54) **VIBRATION MONITORING SYSTEM AND METHOD USING METAL SURFACE WAVE COMMUNICATION**

(30) Priority: 06.02.2023 KR 20230015503
(71) Applicant: Sunny Wave Tech Co., Ltd., Ulju-gun Ulsan 44919 (KR)
(72) Inventor: YOU, Bong Hyun, Seoul 06629 (KR); KONG, Jin Woo, Incheon 21632 (KR)
(74) Representative: EP&C
(86) International application number: PCT/KR2023/019115
(87) International publication number: WO 2024/167113

(57) **Abstract**

According to the present invention, a vibration monitoring system and method using surface wave communication on metallic structures is provided, which overcomes the limitations of conventional technologies that faced difficulties in establishing sensor networks for vibration detection via wireless communication in large-scale production facilities-such as semiconductor or display manufacturing lines-composed of multiple process chambers requiring precise process control. The system comprises a first vibration sensor unit, which includes a vibration sensor and a surface wave resonator and is installed inside a process chamber made of metal; a second vibration sensor unit, which includes a vibration sensor and a communication module and is installed in other locations; and a data transmission unit that includes a relay (access point, AP) for collecting measurement data from each vibration sensor unit. By combining surface wave communication through metallic structures and wireless communication, this system enables accurate and precise vibration monitoring and source tracking even in environments where conventional wireless communication is not feasible.

## Description

### CROSS-REFERENCE TO RELATED APPLICATIONS

This application claims priority to Korean Patent Application No. 10-2023-0015503 filed on Feb. 06, 2023, the entire contents of which are herein incorporated by reference.

### TECHNICAL FIELD

The present invention relates to a device and method for detecting and monitoring vibrations generated in various manufacturing equipment or production facilities. More specifically, the invention addresses the limitations of conventional vibration monitoring systems and methods for production facilities-such as those used in semiconductor or display manufacturing processes-that consist of multiple process chambers and require highly precise process control, but where it has been difficult to establish a sensor network for vibration detection using wireless communication. To overcome these limitations, the present invention provides a vibration monitoring system and method using metal surface wave communication in combination with wireless communication, thereby enabling the construction of a sensor network capable of detecting vibrations even in environments where conventional wireless communication cannot be effectively used, such as in production facilities composed of metal process chambers. By utilizing both metal surface wave communication and wireless communication, the system enables vibration monitoring and source tracking in each process chamber, even under conditions where standard wireless communication is not viable.

Furthermore, the present invention provides a vibration monitoring system and method using metal surface wave communication that enables accurate and precise wireless vibration monitoring and source tracking, even in environments where conventional wireless communication cannot be used. To achieve this, the system comprises a first vibration sensor unit, which includes a vibration sensor and a surface wave resonator and is installed inside a process chamber made of metal; a second vibration sensor unit, which includes a vibration sensor and a communication module and is installed in other areas; and a data transmission unit that includes at least one relay (access point, AP) for receiving measurement signals from the first and second vibration sensor units, collecting the measurement data, and transmitting it to a server or the like. By combining metal surface wave communication and wireless communication, the system enables wireless (non-wired) vibration monitoring and source localization even in environments where standard wireless communication cannot be effectively utilized.

### BACKGROUND

In general, in manufacturing processes such as those for semiconductors or displays, most processes are performed within individual process chambers due to the nature of the production flow. The transport of components and products between and within these chambers is carried out using specially designed transport systems or robots.

In such environments, due to the precision required by these processes, vibrations generated during the operation of manufacturing equipment, transport systems, or robots may cause product defects. To prevent such issues, it is necessary to monitor vibration occurrences in each process, as suggested in documents such as Korean Patent Publication No. 10-2013-0048462 ("Vibration Measuring Device for Diagnosing Semiconductor Equipment") and Korean Registered Patent No. 10-1409986 ("Vibration Monitoring Defect Diagnosis Device").

In production facilities for semiconductors or displays, which are composed of multiple process chambers and require highly precise process control, a sensor network must be established by installing vibration sensors in each chamber to monitor vibration occurrences individually.

Furthermore, to construct a sensor network for detecting vibrations throughout a large-scale semiconductor or display production facility, it is generally more desirable to use wireless communication rather than wired connections, from the perspectives of installation and maintenance. However, wireless communication is subject to signal loss or distortion when obstacles exist in the transmission path. In particular, signal transmission is limited in environments surrounded by conductive materials, such as the interiors of metal process chambers. Consequently, in some cases, it becomes impossible to establish a vibration sensor network using wireless communication in such facilities.

Accordingly, in order to overcome the limitations of conventional vibration monitoring systems and methods for production facilities as described above, it is desirable to propose a newly structured vibration monitoring system and method that allows the establishment of a sensor network using wireless, not wired, communication-even in production environments composed of metal process chambers. However, to date, no system or method has been presented that fully satisfies these requirements.

### [Prior Art Documents]

Korean Unexamined Patent Publication No. 10-2013-0048462 (Published: May 10, 2013)
Korean Registered Patent No. 10-1409986 (Registered: June 20, 2014)

### SUMMARY

The present invention is intended to address the aforementioned problems of the prior art. Accordingly, an objective of the present invention is to provide a vibration monitoring system and method using metal surface wave communication, which overcomes the limitations of conventional vibration monitoring systems and methods that have difficulty constructing a sensor network for detecting vibrations via wireless communication in large-scale production facilities-such as semiconductor or display manufacturing lines-composed of multiple process chambers and requiring precise process control. The system is configured to establish a sensor network for vibration detection by combining metal surface wave communication with wireless communication. As a result, it enables wireless monitoring of vibrations and tracking of their sources in environments where conventional wireless communication is not feasible, such as production facilities composed of metal process chambers.

Another objective of the present invention is to provide a system and method that enables vibration monitoring and source tracking in each process chamber even in environments where conventional wireless communication cannot be used. To this end, the system includes: a first vibration sensor unit, which comprises a vibration sensor and a surface wave resonator and is installed inside a process chamber made of metal; a second vibration sensor unit, which comprises a vibration sensor and a communication module and is installed in other areas; and a data transmission unit, which includes at least one relay (access point, AP) for receiving measurement signals from the first and second vibration sensor units, collecting the measurement data, and transmitting it to a server or the like. By combining metal surface wave communication and wireless communication, the system enables accurate and precise wireless vibration monitoring and source tracking-even in environments where conventional wireless communication is not usable.

To achieve the above objectives, the present invention provides a vibration monitoring system using metal surface wave communication for detecting and monitoring vibrations occurring in a production facility comprising a plurality of process chambers. The system comprises: a first vibration sensor unit, installed at a predetermined position inside each metal process chamber, configured to measure vibrations and transmit the measurement data via metal surface wave communication; a second vibration sensor unit, installed at predetermined positions inside or outside each process chamber, configured to measure vibrations and transmit the measurement data via a predetermined form of wireless communication; and a data transmission unit, configured to receive measurement signals from each of the first and second vibration sensor units, collect the measurement data, and transmit it to an external device according to predefined settings. Accordingly, the first vibration sensor unit is installed inside the metal process chambers to transmit vibration signals through metal surface wave communication, while the second vibration sensor unit is installed in other areas to transmit signals via conventional wireless communication. By combining metal surface wave communication and wireless communication, the system enables the establishment of a vibration monitoring sensor network-even in environments where conventional wireless communication is not feasible-through fully wireless means. Thus, the present invention provides a vibration monitoring system using metal surface wave communication, characterized by its hybrid configuration that enables reliable wireless vibration monitoring in metal-enclosed environments.

Here, the system further comprises: a data analysis unit, configured to receive the measurement data collected via the data transmission unit, monitor vibration occurrences, and perform processing to trace the source of vibration when it occurs; an output unit, which includes a display means configured to present various information, including the measurement data collected by the data transmission unit and the analysis results produced by the data analysis unit; a communication unit, configured to perform data transmission and reception with external devices using at least one of wired or wireless communication methods; and a control unit, configured to control the overall operation of the system.

In addition, the first vibration sensor unit comprises: a vibration sensor configured to detect vibrations; a communication module configured to modulate vibration sensor data measured by the vibration sensor into communication signals of a predetermined format; and a surface wave resonator configured to transmit the modulated measurement signals through the metal surface of the process chamber to the data transmission unit.

In addition the second vibration sensor unit comprises: a vibration sensor configured to detect vibrations; a communication module configured to modulate vibration sensor data measured by the vibration sensor into communication signals of a predetermined format; and an antenna configured to transmit the modulated measurement signals to the data transmission unit.

Herein, the second vibration sensor unit is configured to transmit measurement data using one or more general wireless communication methods selected from RF communication, LTE, Wi-Fi, Bluetooth, Zigbee, LoRa (Long Range), or LoRaWAN (Long Range Wide Area Network).

Furthermore, the data transmission unit includes at least one relay (Access Point; AP) configured to receive measurement signals from each of the first and second vibration sensor units, collect the measurement data, and transmit the collected data to the data analysis unit. Simultaneously, according to predefined settings, the data transmission unit transmits the collected data to an external device, such as a separate monitoring system or server.

In addition, the relay (AP) is characterized in that it includes both a surface wave resonator and a wireless communication antenna, and is configured to simultaneously receive measurement signals transmitted via metal surface wave communication from the first vibration sensor unit and measurement signals transmitted via wireless communication from the second vibration sensor unit, thereby enabling the collection of data through a single relay device.

Furthermore, the data analysis unit is configured to perform processing that visually displays the real-time position (X, Y, Z) of the measured vibration using a three-axis accelerometer, while simultaneously converting the vibration period into a natural frequency and visually displaying both the real-time vibration variations and the frequency-transformed values through Fast Fourier Transform (FFT).

Moreover, the data analysis unit is configured to classify the intensity of the vibration into multiple levels based on predefined criteria according to the magnitude of the detected vibration, and to trace the origin of the vibration by mapping the sensor installation locations, with the results visually displayed.

Additionally, the system is characterized in that the data analysis unit, output unit, communication unit, and control unit are implemented as a single integrated hardware unit.

Alternatively, the data analysis unit, output unit, communication unit, and control unit are configured to perform processing for analyzing and monitoring the sensor data received through the data transmission unit by using an information processing device, such as a PC.

In addition, according to the present invention, there is provided a vibration monitoring information service system configured to provide various types of vibration monitoring information online in response to user requests, the system comprising: a user terminal, including but not limited to a smartphone or tablet PC; a server linked to each user terminal; and a vibration monitoring system configured to monitor vibrations occurring in a production facility and transmit vibration monitoring information to the server. The vibration monitoring system is implemented using the vibration monitoring system employing metal surface wave communication as described above.

Furthermore, according to the present invention, there is provided a vibration monitoring method for detecting and monitoring vibrations occurring in a production facility comprising a plurality of process chambers, the method comprising: an installation step of installing a vibration monitoring system in the production facility; and a monitoring step of monitoring vibration occurrences in the production facility using the vibration monitoring system installed in the installation step. The vibration monitoring system is implemented using the vibration monitoring system employing metal surface wave communication as described above.

As described above, according to the present invention, there is provided a vibration monitoring system and method employing metal surface wave communication, which includes: a first vibration sensor unit, comprising a vibration sensor and a surface wave resonator, installed inside a process chamber made of metal; a second vibration sensor unit, comprising a vibration sensor and a communication module, installed in other parts of the facility; and a data transmission unit comprising at least one relay (Access Point; AP) for receiving measurement signals from the first and second vibration sensor units, collecting the measurement data, and transmitting the data to a server or external system. By employing both metal surface wave communication and wireless communication in combination, the system enables accurate vibration monitoring and source tracing even in environments such as metal process chambers, where conventional wireless communication is typically not feasible.

In addition, according to the present invention, a vibration monitoring system and method using metal surface wave communication is provided, which enables the construction of a wireless (rather than wired) sensor network for vibration detection even in environments where conventional wireless communication cannot be used. This allows for accurate and precise vibration monitoring as well as source tracing. Accordingly, the invention effectively overcomes the limitations of conventional vibration monitoring systems and methods for production facilities-such as those used in semiconductor or display manufacturing-which consist of multiple process chambers and require highly precise process control, but where it has been difficult to build a sensor network for vibration detection using wireless communication.

### BRIEF DESCRIPTION OF THE DRAWINGS

FIG. 1 is a schematic diagram illustrating the overall configuration of a vibration monitoring system using metal surface wave communication according to an embodiment of the present invention.
FIG. 2 is a block diagram schematically illustrating the detailed configuration of a first vibration sensor unit of the vibration monitoring system using metal surface wave communication according to the embodiment shown in FIG. 1.
FIG. 3 is a block diagram schematically illustrating the detailed configuration of a second vibration sensor unit of the vibration monitoring system using metal surface wave communication according to the embodiment shown in FIG. 1.
FIG. 4 is a schematic diagram illustrating the detailed configuration of a data transmission unit of the vibration monitoring system using metal surface wave communication according to the embodiment shown in FIG. 1.
FIG. 5 is a schematic diagram illustrating the overall configuration of a sensor network for vibration monitoring constructed using the vibration monitoring system employing metal surface wave communication according to the embodiment shown in FIG. 1.
FIG. 6 is a conceptual diagram schematically illustrating the tracing of a vibration source through sensor location mapping using the vibration monitoring system employing metal surface wave communication according to the embodiment shown in FIG. 1.

### DETAILED DESCRIPTION OF THE PREFERRED EMBODIMENTS

Hereinafter, with reference to the accompanying drawings, a detailed embodiment of a vibration monitoring system and method using metal surface wave communication according to the present invention will be described.

It should be noted that the following description is merely one exemplary embodiment for implementing the present invention, and the present invention is not limited to the embodiments described below.

Also, in the following description of the embodiments of the present invention, detailed explanations of portions that are the same as or similar to the prior art, or those that would be easily understood and carried out by those skilled in the art, have been omitted to simplify the description.

Continuing with reference to the drawings, the detailed configuration of the vibration monitoring system and method using metal surface wave communication according to the present invention will be described.

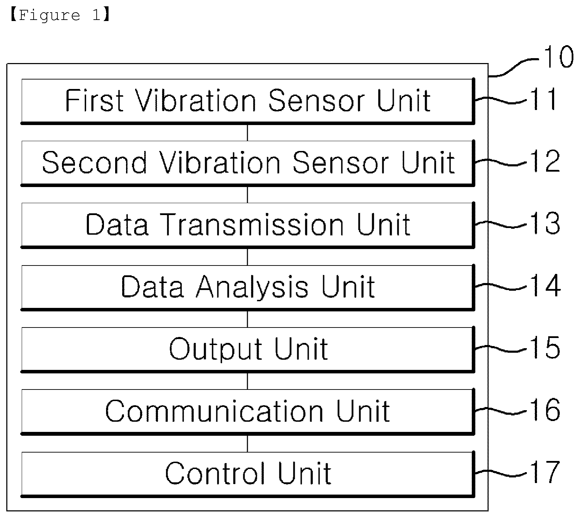

More specifically, referring first to FIG. 1, FIG. 1 is a block diagram schematically illustrating the overall configuration of a vibration monitoring system (10) using metal surface wave communication according to an embodiment of the present invention.

As shown in FIG. 1, the vibration monitoring system (10) using metal surface wave communication according to an embodiment of the present invention is broadly composed of: at least one first vibration sensor unit (11) installed at predetermined positions inside each process chamber made of metal material in a production facility consisting of multiple process chambers, configured to measure vibration and transmit the measured data via metal surface wave communication; at least one second vibration sensor unit (12) installed at predetermined positions inside and outside each process chamber to detect vibration occurring in the production facility, configured to measure vibration and transmit the measured data via a predetermined wireless communication method; and a data transmission unit (13) configured to receive measurement signals from each of the first vibration sensor unit (11) and the second vibration sensor unit (12), collect the measurement data, and transmit the collected data to an external device such as a monitoring system or server.

As shown in FIG. 1, the system (10) further includes a data analysis unit (14) configured to receive the measurement data collected through the data transmission unit (13), monitor vibration occurrences, and perform processing to track the source of the vibrations when they occur; an output unit (15) including a display means such as a monitor or display for presenting various information comprising the measurement data collected through the data transmission unit (13) and the processing results of the data analysis unit (14); a communication unit (16) configured to perform communication with external devices via wired or wireless communication to transmit and receive various data; and a control unit (17) configured to control the overall operation of the above units and the system.

In this case, the data analysis unit (14), output unit (15), communication unit (16), and control unit (17) may be configured as a single hardware unit, such as a monitoring system that analyzes and monitors sensor data received through the data transmission unit (13). Alternatively, preferably, these components may be configured to perform the analysis and monitoring of sensor data received through the data transmission unit (13) by utilizing an information processing device such as a PC. This configuration allows for implementation without the need for separate dedicated hardware, enabling a simpler structure and reduced costs.

Accordingly, with the above-described configuration, the first vibration sensor unit (11) is installed inside the process chambers made of metal to transmit measurement signals via metal surface wave communication, while the second vibration sensor unit (12) is installed in the remaining areas-i.e., inside non-metallic parts of the process chambers and outside each process chamber (such as connection passages)-to transmit measurement signals using conventional wireless communication methods. By combining metal surface wave communication with general wireless communication, it becomes possible to establish a wireless sensor network for vibration monitoring even in environments where standard wireless communication is not feasible.

More specifically, electromagnetic waves generally cannot penetrate metal; when they encounter metal, they are either absorbed or reflected. As a result, conventional wireless communication, which relies on electromagnetic waves, is not possible in environments that are shielded from electromagnetic interference, such as those made of metal. In such environments, like containers, ships, and engine rooms, complex wiring setups for wired communication are required, leading to high costs and occupying a lot of space.

On the other hand, metal surface wave communication is a novel communication method that uses the surface of metal to transmit magnetic signals. By attaching a surface wave resonator to the metal, it is possible to transmit signals or power, allowing real-time sensor detection, as well as voice and video transmission in extreme industrial environments. This capability helps prevent accidents caused by communication failures and enables rapid response. Additionally, since it can be easily integrated with existing wired and wireless communication systems, it has the advantage of being adaptable to various industrial applications.

Thus, metal surface wave communication is gaining attention as a new technology for building convergence IoT (C-IoT) systems, serving as a hybrid solution that combines metal surface wave communication with both wired and wireless communication, particularly in environments where traditional wireless communication is challenging.

As mentioned earlier, the principles of operation for transmitting signals through the metal surface via metal surface wave communication, as well as the detailed configuration of the surface wave communication system, can be understood and implemented by those skilled in the art by referring to existing metal surface wave communication devices and methods. Therefore, in this invention, to keep the explanation concise, detailed descriptions of these aspects-such as the specific content of prior art literature, which can be easily understood and implemented by those skilled in the art-are omitted.

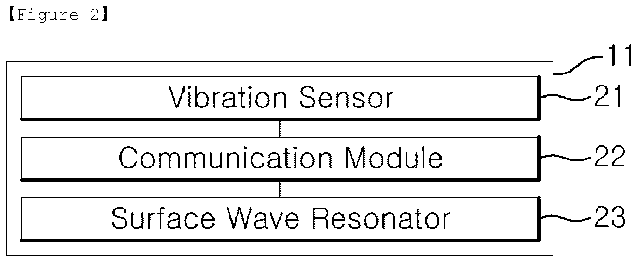

Now, continuing with the explanation, referring to FIG. 2, FIG. 2 shows a block diagram illustrating the specific configuration of the first vibration sensor section (11) in the vibration monitoring system (10) using metal surface wave communication, as presented in FIG. 1 of the invention.

As shown in FIG. 2, the first vibration sensor section (11) may include a vibration sensor (21) for detecting vibrations occurring inside the process chamber during the production process, a communication module (22) that modulates the vibration sensor data measured by the vibration sensor (21) into a predetermined format communication signal, and a surface wave resonator (23) that transmits the modulated measurement signal through the metal surface of the process chamber to an AP attached with a surface wave resonator from the data transmission section (13) outside the process chamber, via the communication module (32).

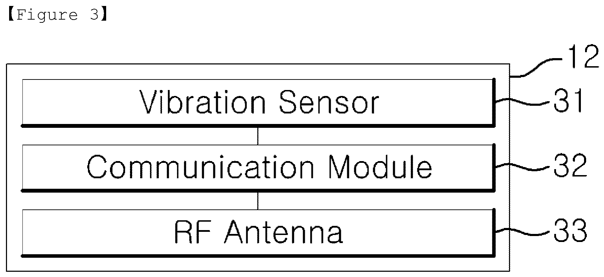

Furthermore, referring to FIG. 3, FIG. 3 is a block diagram showing the specific configuration of the second vibration sensor section (12) in the vibration monitoring system (10) using metal surface wave communication, as shown in FIG. 1 of the present invention.

As depicted in FIG. 3, the second vibration sensor section (12) may include a vibration sensor (31) for detecting vibrations occurring during the production process, a communication module (32) that modulates the vibration sensor data measured by the vibration sensor (31) into a predetermined format communication signal, and an RF antenna (33) for transmitting the modulated measurement signal to the data transmission section (13) outside the process chamber, i.e., to an AP with an attached RF antenna (RF ANT).

In the embodiment of the present invention shown in FIG. 3, the second vibration sensor section (12) is described as transmitting measurement signals using RF communication. However, the present invention is not limited to the configuration shown in this embodiment. That is, the second vibration sensor section (12) may be configured to transmit measurement data to the data transmission section (13) using one or more of the currently used general wireless communication methods, such as LTE, Wi-Fi, Bluetooth, Zigbee, LoRa (Long Range), or LoRaWAN (Long Range Wide Area Network), in addition to RF communication.

Moreover, the data transmission section (13) can be configured to receive measurement signals from the first vibration sensor section (11) and the second vibration sensor section (12), collect the measurement data, and transmit the collected data to the data analysis section (14). Simultaneously, the collected data is transmitted to external devices such as a monitoring system or a server, based on predefined settings. This process is carried out through the inclusion of at least one relay (Access Point; AP).

In this case, the data transmission section (13) may be configured to separately install relays (APs) that receive measurement signals from the first vibration sensor section (11) via metal surface wave communication and relays (APs) that receive measurement signals from the second vibration sensor section (12) via a general wireless communication method. Alternatively, it is preferable that a single relay (AP) is configured to include both a surface wave resonator and an RF antenna, allowing it to simultaneously receive each measurement signal via metal surface wave communication and general wireless communication. Therefore, the present invention is not limited to the configuration presented in the examples, and it should be understood that the invention can be variously modified and altered by those skilled in the art within the scope of the invention's purpose and essence.

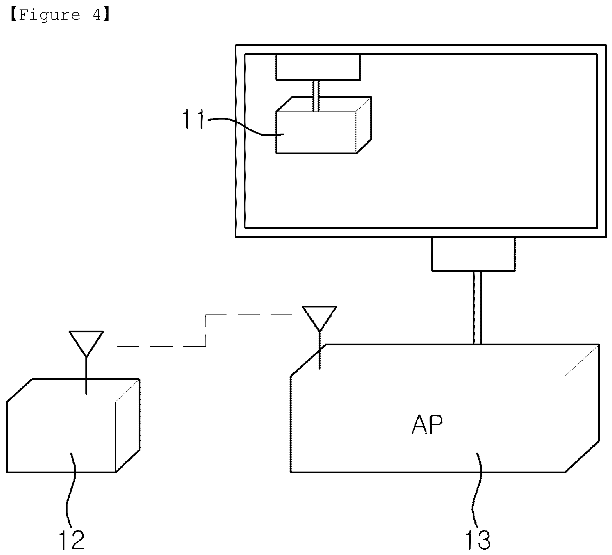

In other words, referring to FIG. 4, FIG. 4 is a schematic diagram illustrating the specific configuration of the data transmission section (13) of the vibration monitoring system (10) according to an embodiment of the present invention, as shown in FIG. 1.

As shown in FIG. 4, the relay (AP) is equipped with both a surface wave resonator and an RF antenna, allowing a single relay (AP) to simultaneously receive measurement signals transmitted from the first vibration sensor section (11) via metal surface wave communication and from the second vibration sensor section (12) via RF wireless communication, enabling the collection of data.

Therefore, as described above, a vibration monitoring system (10) utilizing metal surface wave communication according to the embodiment of the present invention can be implemented, and by doing so, even for large-scale production facilities consisting of multiple metal process chambers, a sensor network for vibration monitoring can be established wirelessly, without the need for wired connections.

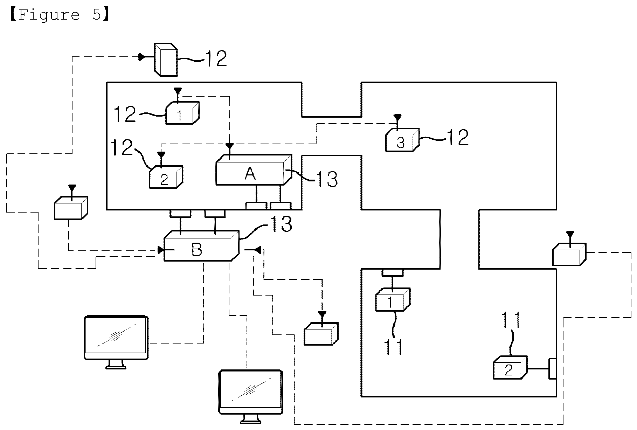

That is, referring to FIG. 5, FIG. 5 is a schematic diagram illustrating the overall configuration of the sensor network for vibration monitoring, which is constructed using the vibration monitoring system (10) according to the embodiment of the present invention, as shown in FIG. 1.

As shown in FIG. 5, the sensor network for vibration monitoring, constructed using the vibration monitoring system (10) according to the embodiment of the present invention, includes multiple vibration measurement terminals with surface wave resonators attached. Specifically, the first vibration sensor section (11) is installed inside each of the process chambers. Additionally, multiple vibration measurement terminals with RF antennas attached, i.e., the second vibration sensor section (12), are installed both inside and outside the process chambers.

More specifically, as shown in FIG. 5, the vibration measurement terminals (12-1, 12-2, 12-3) with RF antennas attached are connected to the AP (13-A) of the data transmission unit (13). The AP (13-A) then connects through the surface wave resonator to the external AP (13-B), enabling the collection of data.

As shown in Figure 5, the vibration measurement devices with surface wave resonators installed inside the chamber (11-1, 11-2) can connect to the AP inside the chamber (13-A) via the metal surface through the surface wave resonators. Similarly, they can also connect directly to the AP outside the chamber (13-B) through the surface wave resonators.

Moreover, as shown in Figure 5, the vibration measurement devices installed outside the chamber, which are equipped with RF antennas, can transmit data to the AP outside the chamber (13-B) through RF communication.

Therefore, as described above, the data collected from each sensor is transmitted through AP (13-B) to the data analysis unit (14) or to an external monitoring system or server. This data is then analyzed to determine whether vibration has occurred, enabling tasks such as vibration monitoring and source tracking to be performed.

More specifically, the data analysis results can display real-time measured values of X, Y, Z using a 3-axis accelerometer. The vibration period can be converted to its natural frequency, and by applying FFT (Fast Fourier Transform), the level of change in the vibration can be represented. Thus, both the real-time variation values and the transformed values into the natural frequency can be displayed. Additionally, by inputting the location information of each installed device, the source of the vibration can be identified.

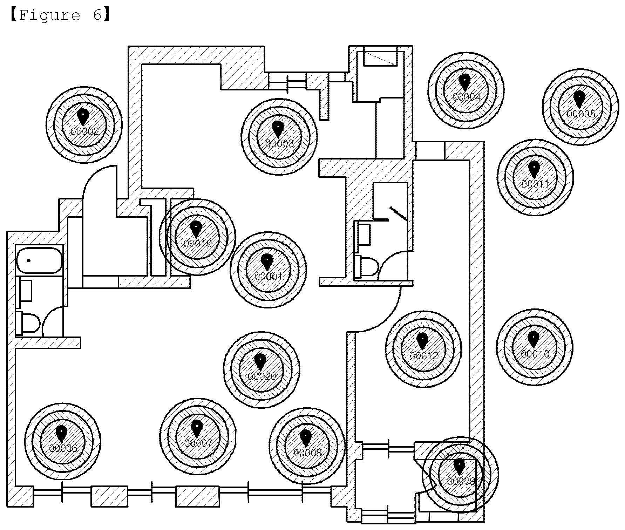

In other words, referring to Figure 6, Figure 6 is a conceptual diagram showing the tracking of the vibration source through sensor installation location mapping using the vibration monitoring system (10) employing metal surface wave communication, as illustrated in the embodiment of the present invention.

As shown in Figure 6, the vibration monitoring system (10) according to the embodiment of the present invention can classify the vibration severity based on predefined criteria, such as danger, warning, and normal stages, depending on the level of vibration. Additionally, through mapping the sensor installation locations, it can track the source of vibration when it occurs and provide visual data representing the identified source.

Additionally, although not shown in the diagram, the system (10) may further include a user terminal configured to include, for example, a smartphone or a tablet PC, and a server linked to each user terminal. This configuration can be implemented as an online-based information service system that provides various information related to vibration monitoring upon the user's request.

Therefore, as described above, the vibration monitoring system and method according to the embodiment of the present invention can be implemented. As a result, according to the present invention, by simultaneously applying signal transmission via metal surface wave communication and traditional wireless communication, a Convergence IoT (C-IoT) system is realized. This enables the accurate measurement and monitoring of vibration data wirelessly using metal surface wave communication, even in environments where traditional wireless communication cannot be utilized. Additionally, with the vibration mapping function, the source of the vibration can be identified, allowing for trend identification and analysis of vibration phenomena.

In conclusion, the detailed description of the vibration monitoring system and method using metal surface wave communication according to the present invention has been provided through the embodiments described above. However, the present invention is not limited to the contents described in the above embodiments. Therefore, it is evident that the present invention may be modified, altered, combined, or replaced in various ways according to the design needs and other factors by those skilled in the art to which the present invention pertains.

### [Description of Reference Numerals]

10. Vibration Monitoring System Using Metal Surface Wave Communication
11. First Vibration Sensor Unit
12. Second Vibration Sensor Unit
13. Data Transmission Unit
14. Data Analysis Unit
15. Output Unit
16. Communication Unit
17. Control Unit
21. Vibration Sensor
22. Communication Module
23. Surface Wave Resonator
31. Vibration Sensor
32. Communication Module
33. RF Antenna

## Claims

1. A vibration monitoring system using metal surface wave communication for detecting and monitoring vibrations occurring in a production facility composed of multiple process chambers, the system comprises:
a first vibration sensor unit installed at predetermined locations inside each process chamber made of metal, configured to measure vibrations and transmit the measured data via metal surface wave communication;
a second vibration sensor unit installed at predetermined locations inside and outside each process chamber, configured to measure vibrations and transmit the measured data via a predetermined wireless communication method; and
a data transmission unit configured to receive measurement signals from each of the first and second vibration sensor units, collect the measured data, and transmit the data to an external device according to predetermined settings;
wherein, by installing the first vibration sensor unit inside the metal process chamber to transmit measurement signals via metal surface wave communication and installing the second vibration sensor unit in the remaining sections to transmit measurement signals via wireless communication, the system is **characterized in that** it enables the construction of a sensor network for wireless vibration monitoring by concurrently utilizing both metal surface wave communication and general wireless communication, even in environments where wireless communication is unavailable.

2. The system according to claim 1, further comprising:
a data analysis unit configured to receive the measured data collected by the data transmission unit, monitor the occurrence of vibrations, and track the source of vibrations when they occur;
an output unit including a display means for displaying various information, including the measured data collected by the data transmission unit and the processing results of the data analysis unit;
a communication unit configured to communicate with an external device via at least one of wired or wireless communication methods to transmit and receive various data; and
a control unit configured to control the overall operation of the system.

3. The system according to claim 1, wherein the first vibration sensor unit comprises:
a vibration sensor for detecting vibrations;
a communication module for modulating vibration sensor data measured by the vibration sensor into a communication signal of a predetermined format; and
a surface wave resonator for transmitting the modulated measurement signal from the communication module to the data transmission unit through the metal surface of the process chamber.

4. The system according to claim 1, wherein the second vibration sensor unit comprises:
a vibration sensor for detecting vibrations;
a communication module for modulating vibration sensor data measured by the vibration sensor into a communication signal of a predetermined format; and
an antenna for transmitting the modulated measurement signal from the communication module to the data transmission unit.

5. The system according to claim 4,
wherein the second vibration sensor unit is configured to transmit the measured data using at least one general wireless communication method selected from the group consisting of RF communication, LTE, Wi-Fi, Bluetooth, Zigbee, LoRa (Long Range), and LoRaWAN (Long Range Wide Area Network).

6. The system according to claim 2,
wherein the data transmission unit comprises at least one repeater (Access Point; AP) configured to receive measurement signals from each of the first and second vibration sensor units, collect the measured data, and transmit the collected data to the data analysis unit and simultaneously transmit the collected data to an external device, including a separate monitoring system or server, according to predetermined settings.

7. The system according to claim 6,
wherein the repeater (AP) is equipped with a surface wave resonator and a wireless communication antenna, and is configured to simultaneously receive and collect data from both measurement signals transmitted via metal surface wave communication from the first vibration sensor unit and measurement signals transmitted via wireless communication from the second vibration sensor unit through a single repeater (AP).

8. The system according to claim 2,
wherein the data analysis unit is configured to visually display the real-time positions (X, Y, Z) of vibrations measured using a triaxial accelerometer and convert the vibration period into a natural frequency and visually display both the real-time variation of vibrations and the values converted into the natural frequency through Fast Fourier Transform (FFT).

9. The system according to claim 2,
wherein the data analysis unit is configured to classify the intensity of vibrations into multiple levels according to predetermined criteria based on the degree of vibration when vibrations occur and track the source of vibrations through mapping of sensor installation locations and visually display the results.

10. The system according to claim 2,
wherein the data analysis unit, the output unit, the communication unit, and the control unit are integrated into a single hardware device.

11. The system according to claim 2,
wherein the data analysis unit, the output unit, the communication unit, and the control unit are configured to analyze and monitor sensor data received through the data transmission unit using an information processing device including a PC.

12. A vibration monitoring information service system configured to provide various vibration monitoring information online in response to a user's request, the system comprises:
a user terminal including a smartphone or tablet PC;
a server linked with each user terminal; and
a vibration monitoring system for monitoring vibrations occurring in a production facility and transmitting vibration monitoring information to the server;
wherein the vibration monitoring system is configured using the vibration monitoring system using metal surface wave communication as described in claim 1.

13. A vibration monitoring method for detecting and monitoring vibrations occurring in a production facility composed of multiple process chambers, the method comprising:
an installation step of installing a vibration monitoring system in the production facility; and
a monitoring step of monitoring the occurrence of vibrations in the production facility using the vibration monitoring system installed in the installation step;
wherein the vibration monitoring system is configured using the vibration monitoring system using metal surface wave communication as described in claim 1.
